# EUROPEAN PATENT SPECIFICATION

(11) **EP 1 323 595 B1**
(45) Date of publication and mention of the grant of the patent: **06.04.2005**
(21) Application number: 02028060.8
(22) Date of filing: 17.12.2002
(51) Int. Cl.: B60R 21/26

(54) **Inflator**
Aufblasvorrichtung
Gonfleur

(30) Priority: 25.12.2001 JP 2001392077; 30.09.2002 JP 2002286163
(43) Date of publication of application: 02.07.2003
(73) Proprietor: TAKATA CORPORATION, Minato-ku, Tokyo 106-8510 (JP)
(72) Inventor: Mizuno, Hideki, Minato-ku, Tokyo 106-8510 (JP)
(74) Representative: Banzer, Hans-Jörg, Dipl.-Ing.

(56) References cited:
- US-B1- 6 170 868
- US-B1- 6 273 462
- PATENT ABSTRACTS OF JAPAN vol. 2000, no. 24, 11 May 2001 (2001-05-11) -& JP 2001 191890 A (DAICEL CHEM IND LTD), 17 July 2001 (2001-07-17)
- "AIR BAG INFLATOR HAVING THRUST NEUTRAL CONNECTION" , RESEARCH DISCLOSURE, KENNETH MASON PUBLICATIONS, HAMPSHIRE, GB, NR. 440, PAGE(S) 2136 XP001052475 ISSN: 0374-4353 * the whole document *

## Description

### [Technical Field of the Invention]

The present invention relates to an inflator suitable for inflating an airbag or the like for protecting occupants in an automotive vehicle.

### [Description of the Related Art]

There is an inflator for inflating an airbag for protecting occupants in the automotive vehicle, which is adapted to generate an impulse wave therein upon actuation of an initiator and open the above-described gas exit by the generated impulse wave (United State Patent No. 6,273,462). Fig. 2 is a cross sectional view of the inflator of United Patent No.6,273,462.

An inflator 100 is provided with a substantially cylindrical pressure container 104 having a gas storage 102 in which a high-pressure gas is filled. At an axial end (distal end) of the pressure container 104, there is provided a gas jet port 106 of a circular opening. The gas jet port 106 is closed by a burst disk 108 formed of a metal sheet or the like. The burst disk 108 is adapted to be burst and open the gas jet port 106 when the pressure in the gas storage 102 exceeds a predetermined value, or when an impulse wave is applied by an initiator 116, which will be described later.

At the other end (rear end) of the pressure container 104, there is provided an initiator housing 114 for installing the initiator. The initiator housing 114 has a substantially cylindrical shape projecting from the rear end of the pressure container 104 into the gas storage 102 toward the gas jet port 106. The initiator 116 for generating an impulse wave is installed in the initiator housing 114.

The initiator 116 is adapted to actuate when a pair of electrodes 118, 120 extended from the rear end thereof for distributing power are energized, generate high-pressure gas whereof the pressure is higher than the pressure in the gas storage 102 and the pressure difference is sufficient for generating an impulse wave in the gas storage 102, and inject the generated high-pressure gas instantaneously from the distal end thereof into the gas storage 102.

In the inflator 100 thus constructed, when the initiator 116 is actuated, and high-pressure gas is injected from the initiator 116 into the gas storage 102, an impulse wave is generated in the gas storage 102 due to the pressure difference between the pressure of gas from the initiator 116 and the pressure of gas in the gas storage 102. The impulse wave is propagated in the gas storage 102 toward the gas jet port 106. When the impulse wave reaches the burst disk 108 closing the gas jet port 106, the burst disk 108 is burst due to the impulse wave before the total pressure in the gas storage 102 reaches to a bursting pressure of the burst disk 108 and thus the gas jet port 106 is opened. As a consequent, gas injects from the inflator 100.

In the inflator 100, a substantially cap shaped diffuser 110 is fitted on the gas jet port 106 at the distal end of the pressure container 104 so as to cover the same. Therefore, when the burst disk 108 bursts, gas in the gas storage 102 passes from the gas jet port 106 through the diffuser 110 and an orifice 112 formed on the peripheral side surface of the diffuser 110 is injected toward the outside.

As described above, in the inflator 100 which is adapted to allow gas to break the burst disk 108 and inject through the jet port 106 before the total gas pressure in the gas storage 102 reaches the burst strength of the burst disk 108, gas at relatively low pressure may be injected from the jet port 106 for a relatively long stretch of time. Consequently, the airbag may be inflated relatively slowly and the internal pressure of the airbag may be maintained at high level for relatively long stretch of time.

### [Problems to be Solved by the Invention]

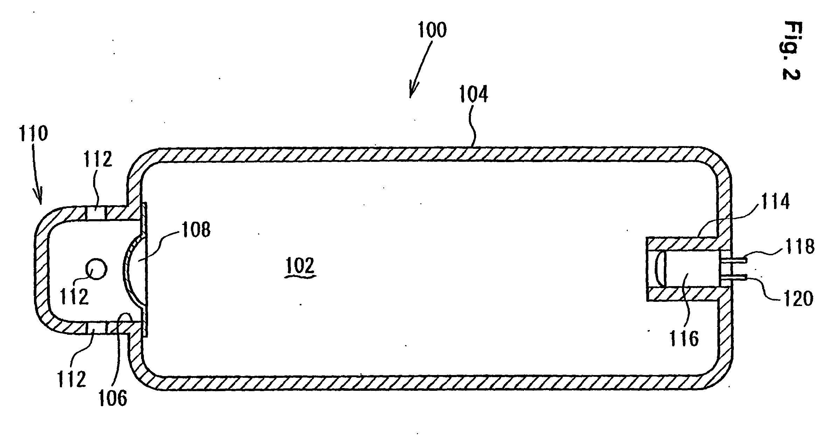

In the inflator 100 shown in the above-described Fig. 2, the initiator 116 is adapted to generate an impulse wave by injecting gas toward the inside of the high-pressure gas storage 102, and thus the initiator 116 is required to be of high-performance that can generate high-pressure gas sufficiently higher than the high-pressure gas filled in the gas storage 102 rapidly. When an initiator having a certain degree of performance, if to a lesser degree, is used, it is conceivable that the generated impulse wave is not strong enough, and thus may not reach the burst disk 108, or if it could reach, may be too weak to burst the burst disk. Therefore, it is necessary to shorten the length of pressure container of the inflator so that the impulse wave can reach the burst disk without fail.

It is an object of the present invention to provide an inflator in which an impulse wave is generated even when the initiator cannot generate such high-pressure gas as described above rapidly, and the impulse wave breaks the gas exit of the pressure container to allow gas to be injected.

### [Means for Solving the Problems]

According to the present invention, this object is achieved by an inflator as defined in claim 1. The dependent claim defines an advantageous or preferred embodiment of the invention.

The inflator according to the present invention includes a pressure container having a gas exit that opens upon receipt of an impulse wave at one end and being filled with high-pressure gas therein, and an impulse wave generator provided on the other end of the pressure container for generating an impulse wave toward the gas exit, and the impulse wave generator including a tube having a distal end that is broken by receiving the impulse wave from the inside to generate an impulse wave toward the gas exit and being filled with gas whereof the pressure is lower than the high-pressure gas, and an initiator provided at the rear end of the tube for emitting an impulse wave into the tube when gas is generated.

In the inflator according to the present invention as described above, an impulse wave is generated in the tube by the pressure difference between the pressure of gas generated by the initiator and the pressure of gas in the tube when the initiator is actuated, and then the distal end of the tube that received the impulse wave is broken to generate another impulse wave due to the pressure difference between the pressure in the tube and the pressure in the pressure container. This impulse wave propagates rapidly in the pressure container, reaches the gas exit of the pressure container, and breaks the gas exit to open. Accordingly, gas is injected from the pressure container.

In the present invention, an initiator is provided in the tube whereof the gas pressure is relatively low. Since the initiator injects gas toward the inside of the tube and generates an impulse wave, the impulse wave can be generated even when the gas pressure generated upon actuation of the initiator is lower than the case of the initiator 116 in the above-described United State Patent No. 6,273,462. Therefore, the initiator used here may be simple in construction and cost effective.

The inflator of the present invention is preferably provided with a booster for promoting generation of the impulse wave by the initiator in the tube.

The booster includes, for example, propellant (gas forming agent) whereof the reaction of gas generation is induced by gas generating action of the initiator, and is adapted, when gas is generated by the initiator, to increase the gas pressure generated by the initiator by means of the gas pressure generated by propellant and to promote generation of the impulse wave in the tube.

With the provision of the booster in the tube, the impulse wave may be generated with lower output of the initiator. Therefore, it is possible to employ the initiator, which is simpler in construction and lower in the costs. Even when the pressure container of relatively high capacity is employed for the inflator, or even when the gas pressure in the pressure container is set to a relatively high value, an impulse wave that is strong enough for opening the gas exit of the pressure container may be generated by the initiator that can only generates relatively low-pressure gas.

### [Brief Description of the Drawings]

Fig. 1 is a cross sectional view of the inflator according to the embodiment of the present invention.
Fig. 2 is a cross sectional view of the inflator according to the related art.
Fig. 3 is a cross sectional view of the inflator according to another embodiment.
Fig. 4 is a cross sectional view of the inflator according to still another embodiment.
Fig. 5 is a cross sectional view of the inflator according to further embodiment.

### [Description of the Embodiments]

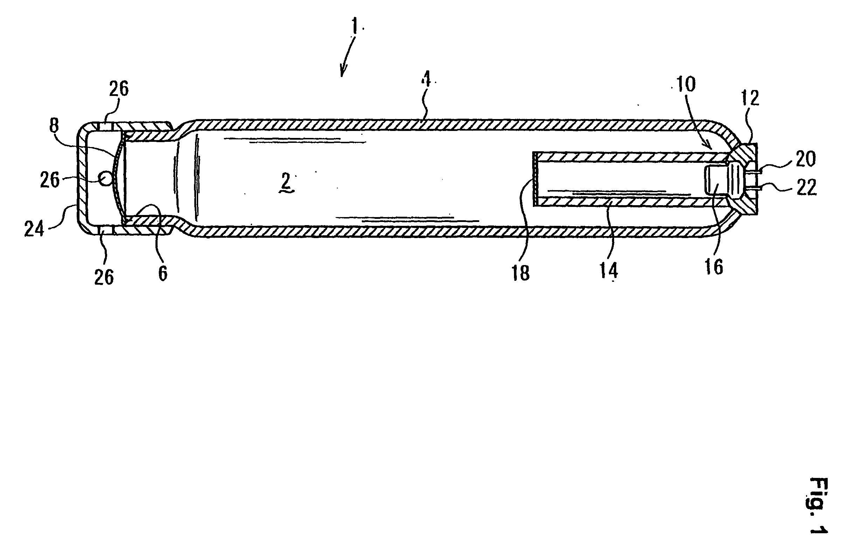

Referring to the drawings, an embodiment of the present invention will now be described. Fig. 1 is a cross sectional view of the inflator according to the embodiment of the present invention.

The inflator 1 includes a substantially cylindrical pressure container 4 having a gas storage 2 filled with high-pressure gas. A gas jet port 6 is provided at an axial end (distal end) of the pressure container 4. The gas jet port 6 is closed by a burst disk 8. The burst disk 8 is adapted to be burst by being applied with an impulse wave from the impulse wave generator 10 that will be described later and to open the gas jet exit 6.

The impulse wave generator 10 for generating an impulse wave for bursting the burst disk 8 is provided on the other end (rear end) of the pressure container 4. The impulse wave generator 10 includes a initiator housing 12 for installing the initiator that is attached at the rear end of the pressure container 4, a tube 14 extending from the initiator housing 12 into the gas storage 2 and directed toward the gas jet port 6, an initiator 16 installed at the rear end of the pressure container 4 via the initiator housing 12 and fitted in the proximal end of the tube 14 at the distal end thereof, and a closure disk 18 that closes the distal end of the tube 14 and is adapted to be burst upon generation of an impulse wave in the tube 14 and open the distal end of the tube 14. In a state of being closed by the closure disk 18, the tube 14 is filled with gas at the pressure lower than the pressure in the gas storage 2. Though the larger pressure difference between the gas pressure in the tube 14 and the gas pressure in the gas storage 2 is more preferable, for example, assuming that the gas pressure in the tube is one atmosphere, the preferable gas pressure in the gas storage is 1.5 times the gas pressure in the tube.

Gas to be filled in the tube 14 and gas to be filled in the gas storage 2 may be incombustible gas, and thus, for example, air, nitrogen, or helium is filled.

The initiator 16 is adapted to actuate when electrodes 20, 22 provided at the rear end for distributing power are energized, so that high-pressure gas being higher than the gas pressure in the tube 14 and being sufficient for generating an impulse wave in the tube 14 is injected.

In the inflator 1 thus constructed, when the initiator is actuated and high-pressure gas is injected from the initiator 16 into the tube 14, an impulse wave is generated in the tube 14 due to the pressure difference between the gas pressure generated by the initiator and the pressure in the tube 14. The impulse wave propagates in the tube 14 rapidly toward the distal end of the tube 14 to burst the closure disk 18. Subsequently, a impulse wave is generated due to the pressure difference between the pressure of gas filling filled in the gas storage 2 and the pressure generated by the impulse wave from the impulse wave generator 10, which propagates in the gas storage 2 toward the gas jet port 6. When the impulse wave reaches the burst disk 8 closing the gas jet port 6, the burst disk 8 is broken by this impulse wave before the total pressure in the gas storage 2 reaches the bursting pressure of the burst disk 8, and opens the gas jet port 6. Accordingly, gas is injected from the inflator 1.

In the present embodiment, since the distal end of the tube 14 is closed by the closure disk 18, the gas pressure generated by the operation of the initiator is combined with low-pressure gas in the tube during the period until the closure disk is burst by the impulse wave, and the compression pressure is built up. Gas generates heat when compressed, whereby the closure disk is burst not only by the impulse wave, but also by heat expansion, and thus effective discharge of gas is achieved.

In the case of the above-described USP No.6273462, the initiator housing is not closed, and thus there is no heat generation and only an impulse wave is generated.

In this embodiment, a diffuser 24 is fitted at the distal end of the pressure container 4, and gas injected from the gas jet port 6 passes through the diffuser 24, and is flown out through an orifice 26 formed on the peripheral side surface of the diffuser 24.

In the inflator 1, since an impulse wave is generated in the tube 14 by injecting gas from the initiator 16 toward the tube 14 whereof the gas pressure is lower than in the gas storage 2, the impulse wave may be generated even when the gas pressure from the initiator 16 is lower than the gas pressure from the initiator 116 shown in Fig. 2. The pressure in the tube 14 is lower than the pressure in the gas storage 2, and it may be, for example, the pressure as low as atmospheric pressure. Therefore, the gas pressure from the initiator 16 required for generating an impulse wave in the tube 14 does not have to be so high, and the initiator of relatively low output can generate an impulse wave in the tube 14.

Accordingly, in the inflator 1, the initiator that is simple in construction and low in the costs may be employed.

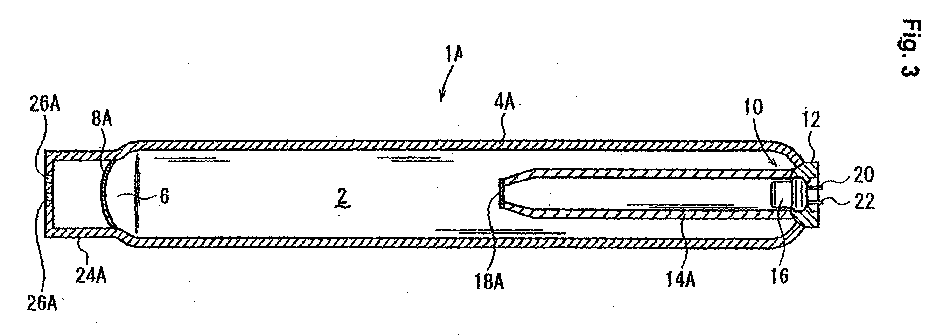

Fig. 3 is a cross sectional view of an inflator 1A according to another embodiment of the present invention. In this embodiment, a diffuser 24A is integrally provided at the distal end of a pressure container 4A, and an orifice 26A is formed on the distal end surface of the diffuser 24A. Consequently, gas from the gas jet port 6 is discharged axially of the pressure container 4A as is.

In this embodiment, a tube 14A of the impulse wave generator 10 is tapered on the side of a closure disk 18A. Accordingly, propagation of generated impulse wave to a burst disk 8A is easily achieved.

In this inflator 1A, the pressure container 4A is elongated, and the tube 14A is also elongated. Since the pressure container 4A is elongated, even when the initiator 16 of the impulse wave generator 10 and burst disk 8A are away from each other and thus the impulse wave is hardly propagated, the impulse wave is discharged at the position closer to the burst disk 8A because the length of the tube 14A is long. Therefore, the burst disk 8A may be broken without problem, whereby the output of the initiator 16 does not have to be increased only because the inflator is elongated.

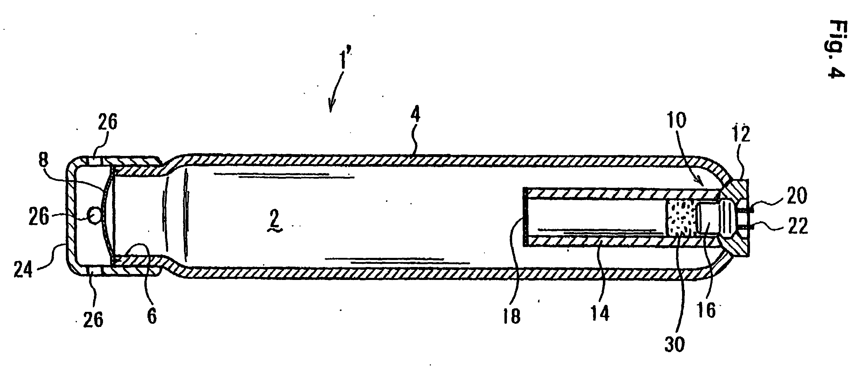

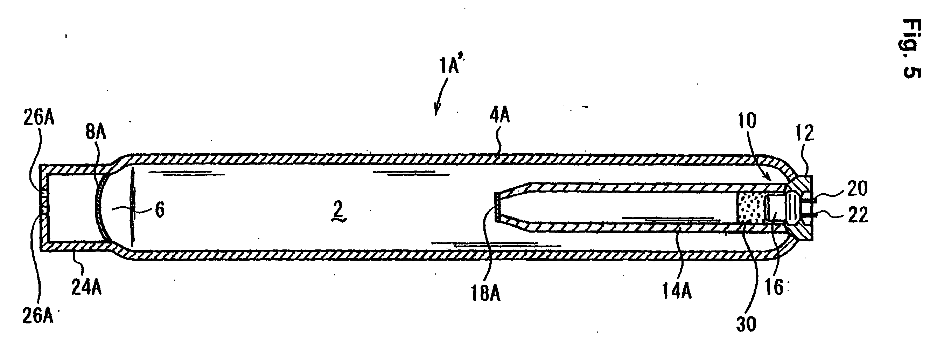

Fig. 4 and Fig. 5 are cross sectional views of the inflator according to the different embodiments of the present invention respectively showing structures in which a booster for promoting generation of an impulse wave by the initiator is provided in the tube.

In inflators 1', 1A' in Fig. 4 and Fig. 5, a booster 30 is provided in the tubes 14, 14A respectively so as to be adjacent to the distal end of the initiator 16. The booster 30 includes propellant (gas generating agent) whereof the reaction of gas generation is induced by gas generating action of the initiator 16, and is adapted, when gas is generated by the initiator 16, to increase the gas pressure generated by the initiator 16 by the gas pressure generated by means of propellant and to promote generation of the impulse wave in the tubes 14, 14A.

The inflators 1', 1A' have the same structure as the inflator 1 in Fig. 1 and the inflator 1A in Fig. 3 except that the booster 30 is provided in the tubes 14, 14A respectively. In Fig. 4 and Fig. 5, the same numerals as in the Fig. 1 and Fig. 3 designate the same components.

In the inflator 1', 1A' thus constructed, when the initiator 16 generates gas, propellant in the booster 30 shows reaction of gas generation, and the gas pressure generated by the initiator 16 is increased by the gas pressure generated by the booster 30. Therefore, the initiator 16 is capable of generating an impulse wave in the tubes 14, 14A even when the generated gas pressure is lower than the cases of the inflators 1, 1A shown in the aforementioned Fig. 1 and Fig. 3 by the amount corresponding to the gas pressure generated by the booster 30. Accordingly, in the inflator 1' and the inflator 1A, the initiator which is further simple in construction and low in the costs may be employed.

Even in the case in which the pressure containers 4, 4A whereof the gas storage 2 has relatively large capacity, or is elongated are employed, or in which the pressure of gas stored in the gas storage 2 is set to a relatively high value, a impulse wave which is strong enough to burst the burst disks 8, 8A at the gas jet port 6 can be generated by the inflator generating relatively low gas pressure by providing the booster 30 in the tubes 14, 14A.

### [Advantages]

As is described above, the present invention provides an inflator which is capable of generating an impulse wave and allowing the impulse wave to burst the gas exit of the pressure container to inject gas therefrom even with the initiator which cannot generate high-pressure gas outstandingly rapidly.

## Claims

1. An inflator (1; 1A; 1'; 1A') comprising:
a pressure container (4) having a gas exit (6) that opens upon receipt of an impulse wave at one end and being filled with high-pressure gas therein;
an impulse wave generator (10) provided on the other end of the pressure container (4) for generating an impulse wave toward the gas exit (6); and
the impulse wave generator (10) including:
a tube (14; 14A);
an initiator (16) provided at the rear end of the tube (14; 14A) for emitting an impulse wave into the tube (14; 14A) when gas is generated; **characterised in that**
said tube (14, 14A) has a distal end that is broken by receiving the impulse wave from the inside to generate an impulse wave toward the gas exit and is filled with gas whereof the pressure is lower than the high-pressure gas.

2. An inflator according to Claim 1, **characterized in that** the initiator (16) is provided with a booster (30) for promoting generation of impulse wave by the initiator (16) in the tube (14; 14A).

## Patentansprüche

1. Aufblasvorrichtung (1; 1A; 1; 1A') umfassend:
einen Druckbehälter (4), welcher einen Gasausgang (6), der sich bei Aufnahme einer Impulswelle öffnet, an einem Ende aufweist und mit einem unter hohem Druck stehenden Gas gefüllt ist;
einen Impulswellengenerator (10), welcher auf dem anderen Ende des Druckbehälters (4) vorhanden ist, um eine Impulswelle zu dem Gasausgang (6) hin zu erzeugen; und
wobei der Impulswellengenerator (10) aufweist:
ein Rohr (14; 14A);
einen Zünder (16), welcher an dem rückseitigen Ende des Rohrs (14; 14a) vorhanden ist, um eine Impulswelle in das Rohr (14; 14A) auszusenden, wenn Gas erzeugt wird;
**dadurch gekennzeichnet,**
**dass** das Rohr (14; 14A) ein distales Ende aufweist, welches durch eine Aufnahme der Impulswelle von der Innenseite zerbrochen wird, um eine Impulswelle zu dem Gasausgang hin zu erzeugen, und welches mit Gas, dessen Druck geringer als derjenige des unter hohem Druck stehenden Gases ist, gefüllt ist.

2. Aufblasvorrichtung nach Anspruch 1, **dadurch gekennzeichnet, dass** der Zünder (16) mit einem Verstärker (30) versehen ist, um eine Erzeugung der Impulswelle durch den Zünder (16) in dem Rohr (14; 14A) zu fördern.

## Revendications

1. Gonfleur (1; 1A; 1'; 1A'), comprenant:
un récipient sous pression (4) comportant une sortie de gaz (6) qui s'ouvre sur réception d'une onde de choc à une extrémité, et rempli à l'intérieur de gaz à haute pression;
un générateur d'onde de choc (10) pourvu sur l'autre extrémité du conteneur sous pression (4) en vue de générer une onde de choc vers la sortie de gaz (6); et
le générateur d'onde de choc (10) comprenant:
un tube (14; 14A);
un initiateur (16) pourvu à l'extrémité arrière du tube (14; 14A) en vue d'émettre une onde de choc dans le tube (14; 14A) lorsque le gaz est généré; **caractérisé en ce que**
ledit tube (14; 14A) présente une extrémité distale qui est brisée en recevant l'onde de choc en provenance de l'intérieur afin de générer une onde de choc vers la sortie de gaz, et se trouve rempli de gaz dont la pression est inférieure à celle du gaz à haute pression.

2. Gonfleur selon la revendication 1, **caractérisé en ce que** l'initiateur (16) est pourvu d'un moyen d'amplification (30) destiné à promouvoir la génération d'une onde de choc par l'initiateur (16) dans le tube (14; 14A).
